# EUROPÄISCHE PATENTSCHRIFT

(11) **EP 2 283 257 B1**
(45) Veröffentlichungstag und Bekanntmachung des Hinweises auf die Patenterteilung: **03.04.2013**
(21) Anmeldenummer: 09757366.1
(22) Anmeldetag: 28.04.2009
(51) Int. Cl.: F16H 61/42

(54) **HYDROMODUL MIT ZWEI IM HYDROMODUL INTEGRIERTEN SCHRÄGACHSEN-TRIEBWERKEN**
HYDRAULIC MODULE HAVING TWO OBLIQUE AXIS DRIVE UNITS WHICH ARE INTEGRATED IN THE HYDRAULIC MODULE
MODULE HYDRAULIQUE AVEC DEUX AXES OBLIQUES D'ENTRAÎNEMENT INTÉGRÉS DANS LE MODULE HYDRAULIQUE

(30) Priorität: 02.06.2008 DE 102008002140
(43) Veröffentlichungstag der Anmeldung: 16.02.2011
(73) Patentinhaber: ZF Friedrichshafen AG, 88038 Friedrichshafen (DE)
(72) Erfinder: BREHMER, Udo, 78464 Konstanz (DE); HAEFFNER, Martin, 88046 Friedrichshafen (DE)
(74) Vertreter: Gebhard, Wolfgang
(86) Internationale Anmeldenummer: PCT/EP2009/055094
(87) Internationale Veröffentlichungsnummer: WO 2009/146983

(56) Entgegenhaltungen:
- WO-A-2009/047039
- DE-B3-102006 025 347
- US-A- 3 834 164
- US-A1- 2004 261 408

## Beschreibung

Die Erfindung betrifft ein Hydromodul nach der im Oberbegriff von Anspruch 1 näher definierten Art.

Gattungsgemäße Hydromodule, insbesondere für hydrostatischmechanische Getriebe, weisen, wie in der DE 10 2006 025 347 B3 offenbart, integrierte Schrägachsen-Triebwerke auf, die jeweils einen Zylinderblock mit darin beweglichen Verdrängern aufweisen, die an achsparallelen Wellen jeweils schwenkbar gelagert sind, wobei die Zylinderblöcke beider Schrägachsen-Triebwerke mit unterschiedlichen Schwenkwinkeln in einem gemeinsamen Joch gelagert und zur Verstellung des Volumenstroms mittels eines Servosystems mit dem Joch zwangsweise gemeinsam verschwenkbar sind.

Bei der gattungsbildenden DE 10 2006 025 347 B3 besteht die Servoverstellung aus zwei Servokolben, welche auf das Joch einwirken. Eine exakte Einregelung des Jochs, insbesondere eine exakte Rückmeldung zur Einregelung, ist aufgrund der auftretenden Toleranzen aufwendig.

Der vorliegenden Erfindung liegt die Aufgabe zugrunde, ein Hydromodul zu schaffen, welches sich durch einen einfachen Aufbau und exakte Ansteuerung auszeichnet.

Die Aufgabe wird mit einem, auch die kennzeichnenden Merkmale des Hauptanspruchs aufweisenden, gattungsgemäßen Hydromodul gelöst.

Erfindungsgemäß weist das Hydromodul ein Joch auf, welches um eine Drehachse drehbar gelagert ist. Durch Verschwenken des Jochs um die Drehachse wird das Hubvolumen der Schrägachsen-Triebwerke verändert. Das Joch weist einen Dorn auf, welcher zwischen den zwei Lagerstellen des Jochs angeordnet ist. Der Dorn ist einstückig mit dem Joch verbunden oder als separates Bauteil ausgeführt, welches ortsfest mit dem Joch verbunden ist.

Der Dorn steht mit einem Kolben in Wirkverbindung, wobei eine translatorische Bewegung des Kolbens den Dorn so in Bewegung versetzt, dass das Joch um seine Drehachse gedreht wird.

In einer weiteren Ausgestaltungsform der Erfindung weist der Kolben eine Öffnung auf, in welche der Dorn eingreift. Vorzugsweise ist der Dorn an seinem Ende, an welchem er in den Kolben eingreift, kugelförmig ausgebildet, was den Reibwiderstand zwischen Kolben und Dorn minimiert. Vorzugsweise befindet sich der Dorn zwischen den zwei Schrägachsen-Triebwerken, wobei das Joch einen Steg zwischen den zwei Schrägachsen-Triebwerken aufweisen kann, welcher den Dorn aufnimmt.

Die Längsachse des Kolbens ist rechtwinklig zur Drehachse des Jochs angeordnet, wobei der Kolben zwischen den Lagerstellen der Schrägachsen-Triebwerke angeordnet ist. Dadurch ist es möglich, in direkter Verlängerung des Kolbens koaxial zum Kolben Informationen über den momentanen Verstellwinkel des Jochs auf eine einfache Weise abzugreifen und über eine Regeleinrichtung das Joch präzise einzuregeln.

In einer weiteren Ausgestaltungsform der Erfindung weist das Hydromodul eine Platte auf, welche einerseits die Lagerung der Schrägachsen-Triebwerke aufnimmt und andererseits eine Bohrung für den Kolben aufweist. Des weiteren ist die Lagerung des Jochs mit der Platte ortsfest verbunden.

Weitere Merkmale sind der Figuren-Beschreibung zu entnehmen.

Es zeigen:

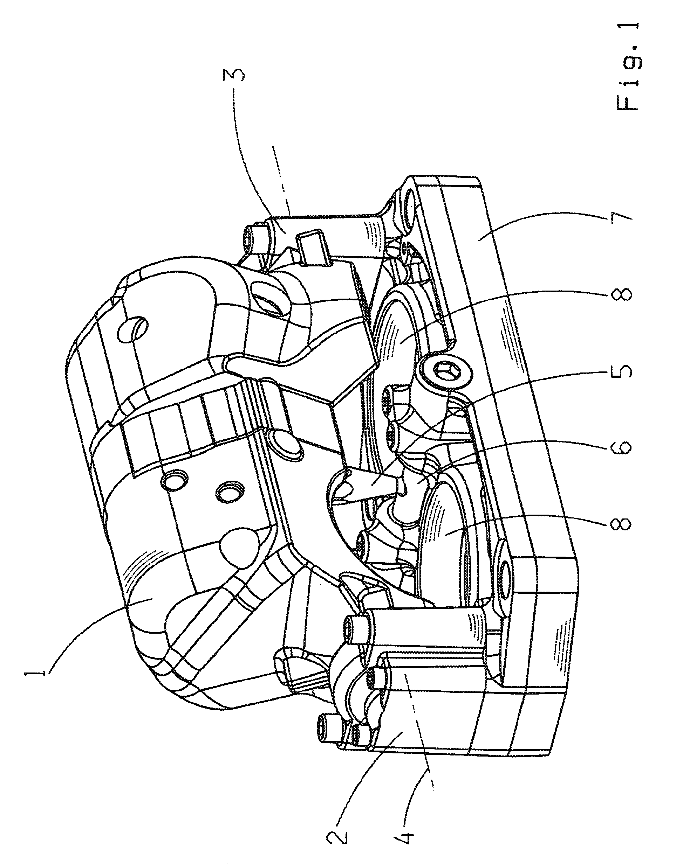

- Fig. 1: eine räumliche Darstellung eines Teils des Hydromoduls und

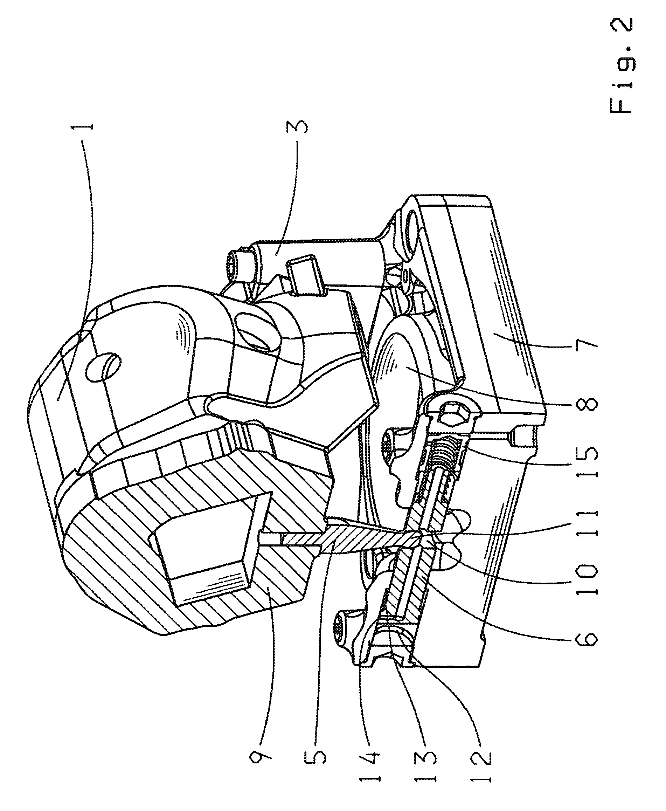

- Fig. 2: einen Schnitt durch die räumliche Darstellung von Fig. 1.

Fig. 1:
   Ein Joch 1 ist über eine erste Lagerung 2 und eine zweite Lagerung 3 drehbar um die Drehachse 4 gelagert. Im Joch 1 sind Schrägachsen-Triebwerke, wie in der DE 10 2006 025 347 B3 beschrieben, angeordnet. Zwischen den Schrägachsen-Triebwerken befindet sich ein Dorn 5, welcher in einen Kolben 6 eingreift. Der Kolben 6 ist in einer Platte 7 aufgenommen, welche die Lagerung 8 der Schrägachsen-Triebwerke trägt und mit der ersten Lagerung 2 und der zweiten Lagerung 3 verbunden ist.
Fig. 2:
   Das Joch 1 weist einen Steg 9 auf, welcher zwischen den Schrägachsen-Triebwerken angeordnet ist und in welchen der Dorn 5 eingeschraubt ist. Der Kolben 6 weist eine Öffnung 10 auf, in welche das kugelförmige Ende 11 des Dorns 5 eingreift. Der Kolben 6 bildet mit der Platte 7 einen ersten Raum 12 und einen zweiten Raum 13. Wird der erste Raum 12 mit Druckmittel beaufschlagt, so bewegt sich der Kolben 6 in eine erste Bewegungsrichtung, wodurch über den Dorn 5 das Joch 1 in eine erste Verdrehrichtung verdreht wird. Durch Druckbeaufschlagung des zweiten Raums 13 bewegt sich der Kolben 5 in eine zweite Bewegungsrichtung, wobei das Joch 1 über den Dorn 5 in eine zweite Verdrehrichtung verdreht wird. Der Kolben 6 weist zwischen dem ersten Raum 12 und dem zweiten Raum 13 eine Nut 14 auf, über welche Druckmittelleckage zur Öffnung 10 abgeführt wird, um ein präzises Arbeiten des Kolbens zu gewährleisten. An seinem, dem Raum 12 gegenüberliegenden Ende weist der Kolben 6 Anschlußmittel 15 auf, mittels welcher eine Rückmeldung bzw. eine Positionsbestimmung des Kolbens 6 in hydraulischer oder elektronischer Form möglich wird.

Durch die Erfindung wird ein Hydromodul geschaffen, welches eine exakte Ansteuerung des Hubvolumens ohne zusätzlichen Bauraum ermöglicht.

### Bezugszeichen

- 1: Joch
- 2: erste Lagerung
- 3: zweite Lagerung
- 4: Drehachse
- 5: Dorn
- 6: Kolben
- 7: Platte
- 8: Lagerung
- 9: Steg
- 10: Öffnung
- 11: kugelförmiges Ende
- 12: erster Raum
- 13: zweiter Raum
- 14: Nut
- 15: Anschlußmittel

## Patentansprüche

1. Hydromodul mit zwei im Hydromodul integrierten Schrägachsen-Triebwerken, die jeweils einen Zylinderblock aufweisen, welche in einem gemeinsamen Joch (1) gelagert sind, welches drehbar um eine Drehachse (4) in Lagerstellen (2, 3) zur Verstellung des Hubvolumens gelagert ist, **dadurch gekennzeichnet, dass** das gemeinsame Joch (1) zwischen den Lagerstellen (2, 3) einen Dorn (5) aufweist, welcher mit einem Kolben (6) in Wirkverbindung steht, wobei bei einer translatorischen Bewegung des Kolbens (6) das Joch (1) um seine Drehachse (4) gedreht wird.

2. Hydromodul nach Anspruch 1, **dadurch gekennzeichnet, dass** der Kolben (6) eine Öffnung (10) aufweist, in welche der Dorn (5) eingreift.

3. Hydromodul nach Anspruch 1, **dadurch gekennzeichnet, dass** der Kolben (6) und der Dorn (5) zwischen den Schrägachsen-Triebwerken angeordnet ist.

4. Hydromodul nach Anspruch 1, **dadurch gekennzeichnet, dass** das Joch (1) zwischen den Schrägachsen-Triebwerken einen Steg (9) aufweist, welcher mit dem Dorn (5) verbunden ist.

5. Hydromodul nach Anspruch 4, **dadurch gekennzeichnet, dass** der Steg (9) parallel zum Kolben (6) angeordnet ist.

6. Hydromodul nach Anspruch 1, **dadurch gekennzeichnet, dass** der Dorn (5) ein kugelförmiges Ende (11) aufweist, welches in den Kolben eingreift.

7. Hydromodul nach Anspruch 1, **dadurch gekennzeichnet, dass** der Dorn (5) rechtwinklig zur Drehachse (4) des Jochs (1) angeordnet ist.

8. Hydromodul nach Anspruch 1, **dadurch gekennzeichnet, dass** der Kolben (6) in einer Platte (7) angeordnet ist, in welcher die Lagerung (8) der Schrägachsen-Triebwerke angeordnet ist.

9. Hydromodul nach Anspruch 8, **dadurch gekennzeichnet, dass** die Lagerung (2, 3) des Jochs (1) mit der Platte (7) in Verbindung steht.

## Claims

1. Hydraulic module having two oblique axis drive units which are integrated in the hydraulic module and have in each case a cylinder block and are mounted in a common yoke (1) which is mounted rotatably about a rotational axis (4) in bearing points (2, 3) for adjustment of the stroke volume, **characterized in that** the common yoke (1) has an arbor (5) between the bearing points (2, 3), which arbor (5) is operatively connected to a piston (6), wherein the yoke (1) is rotated about its rotational axis (4) in the case of a translational movement of the piston (6).

2. Hydraulic module according to Claim 1, **characterized in that** the piston (6) has an opening (10) into which the arbor (5) engages.

3. Hydraulic module according to Claim 1, **characterized in that** the piston (6) and the arbor (5) are arranged between the oblique axis drive units.

4. Hydraulic module according to Claim 1, **characterized in that** the yoke (1) has a web (9) between the oblique axis drive units, which web (9) is connected to the arbor (5).

5. Hydraulic module according to Claim 4, **characterized in that** the web (9) is arranged parallel to the piston (6).

6. Hydraulic module according to Claim 1, **characterized in that** the arbor (5) has a spherical end (11) which engages into the piston.

7. Hydraulic module according to Claim 1, **characterized in that** the arbor (5) is arranged at a right angle to the rotational axis (4) of the yoke (1).

8. Hydraulic module according to Claim 1, **characterized in that** the piston (6) is arranged in a plate (7) in which the bearing (8) of the oblique axis drive units is arranged.

9. Hydraulic module according to Claim 8, **characterized in that** the bearing (2, 3) of the yoke (1) is connected to the plate (7).

## Revendications

1. Module hydraulique comprenant deux moteurs à axes obliques intégrés dans le module hydraulique, qui présentent à chaque fois un bloc-cylindres, qui sont montés dans une culasse (1) commune qui est montée à rotation autour d'un axe de rotation (4) dans des points de palier (2, 3) pour le réglage de la cylindrée, **caractérisé en ce que** la culasse (1) commune présente entre les points de palier (2, 3) un mandrin (5) qui est en liaison fonctionnelle avec un piston (6), la culasse (1) étant tournée autour de son axe de rotation (4) dans le cas d'un mouvement de translation du piston (6).

2. Module hydraulique selon la revendication 1, **caractérisé en ce que** le piston (6) présente une ouverture (10) dans laquelle s'engage le mandrin (5).

3. Module hydraulique selon la revendication 1, **caractérisé en ce que** le piston (6) et le mandrin (5) sont disposés entre les moteurs à axes obliques.

4. Module hydraulique selon la revendication 1, **caractérisé en ce que** la culasse (1) présente entre les moteurs à axes obliques une membrure (9) qui est connectée au mandrin (5).

5. Module hydraulique selon la revendication 4, **caractérisé en ce que** la membrure (9) est disposée parallèlement au piston (6).

6. Module hydraulique selon la revendication 1, **caractérisé en ce que** le mandrin (5) présente une extrémité (11) de forme sphérique qui vient en prise dans le piston.

7. Module hydraulique selon la revendication 1, **caractérisé en ce que** le mandrin (5) est disposé à angle droit par rapport à l'axe de rotation (4) de la culasse (1).

8. Module hydraulique selon la revendication 1, **caractérisé en ce que** le piston (6) est disposé dans une plaque (7) dans laquelle est disposé le support sur palier (8) des moteurs à axes obliques.

9. Module hydraulique selon la revendication 8, **caractérisé en ce que** le support sur palier (2, 3) de la culasse (1) est en liaison avec la plaque (7).
